# EUROPEAN PATENT APPLICATION

(11) **EP 4 848 143 A1**
(43) Date of publication of application: **02.12.2026**
(21) Application number: 25178711.5
(22) Date of filing: 26.05.2025
(51) Int. Cl.: G06N 3/045, G06N 3/098, G05B 13/02

(54) **A COMPUTER-IMPLEMENTED METHOD FOR TRAINING A MACHINE LEARNING MODEL**

(71) Applicant: Zenseact AB, 417 56 Gothenburg (SE)
(72) Inventor: LUVÖ, Thomas, 443 60 Stenkullen (SE); BEXER, Jacob, 436 53 Hovås (SE); ALIBEIGI, Mina, 417 65 Göteborg (SE); PETERSSON, Christoffer, 426 55 Västra Frölunda (SE)
(74) Representative: Zacco Sweden AB

(57) **Abstract**

The herein disclosed technology at least partly relates to a computer-implemented, performed in a vehicle, for training a machine learning model. The method (100) comprises: i. obtaining (S102), from one or more sensors of the vehicle, a sensor data sample pertaining to a surrounding environment of the vehicle; ii. generating (S104) one or more sensor data embeddings associated with the sensor data sample, wherein the one or more sensor data embeddings are representations of the sensor data sample in a multi-dimensional space, generated by processing said sensor data sample through one or more sensor data encoding networks that have been trained to process sensor data samples and to output corresponding sensor data embeddings in the multi-dimensional space; iii. determining (S106) whether the sensor data sample meets a defined relevance criterion; iv. in response to the sensor data sample meeting the defined relevance criterion, training (5108) the machine learning model, using the sensor data sample, thereby generating a local update of the machine learning model; and transmitting (S112), to a remote entity, information indicative of the local update of the machine learning model and the one or more sensor data embeddings.

## Description

### TECHNICAL FIELD

The present disclosed technology relates to the field of machine learning. In particular, it is related to methods and devices for training a machine learning model in a decentralized manner.

### BACKGROUND

Modern vehicles are increasingly equipped with advanced sensors, computing platforms, and connectivity technologies, enabling the generation of massive volumes of data during everyday operation. This data provides valuable input for training machine learning models used in automated driving (AD) functionalities, such as improving features like environment perception, traffic prediction, trajectory planning, and driver assistance.

In traditional machine learning workflows, raw data is collected from distributed sources and centralized for training. However, the growing emphasis on data privacy, bandwidth limitations, and regulatory compliance has led to the adoption of decentralized training methods, such as federated learning, swarm learning, edge/on device learning. This technique is particularly relevant in the automotive sector, where connected vehicles generate large volumes of sensor data across diverse operating conditions.

In decentralized (or distributed) learning schemes, individual vehicles (or edge devices) perform training to generate model updates locally based on their own data. Only the resulting model adjustments, rather than the raw data itself, are transmitted to a central coordinating system, which then can distribute a global update of the model from aggregating the local updates. This enables an automatic and fast improvement loop for the applicable products which are built on these models.

While such decentralized training methods help address some aspects such as data privacy and computational resources, they introduce new complexities in tracking, documenting, and managing the training process, to enable traceability, reproducibility, and verification. This is important for ensuring compliance and trustworthiness of the products. However, existing decentralized training frameworks typically focus on the model aggregation and data privacy but provide little to no support for systematic documentation throughout the training process.

Accordingly, there is a need for new and improved solutions for decentralized learning of machine learning models, and in particular one that enables documentation and control of the decentralized training process across a vehicle fleet.

### SUMMARY

The disclosed technology seeks to mitigate, alleviate or eliminate one or more of the above-identified deficiencies and disadvantages in the prior art to address various problems relating to documentation of decentralized learning of machine learning models, particularly in the context of autonomous or semi-autonomous driving. The disclosed technology enables the possibility to seamlessly go between a decentralized learning methodology on the edge and centralized training. It also enables a documentation of all training that has taken place in the fleet, and the data connected to that training, and a version control history of the trainings distributed over the fleet. This has the potential to enable federated learning in an AD/ADAS context with improved reliability and security as it is possible to restart with centralized training.

Various aspects and embodiments of the disclosed technology are defined below and in the accompanying independent and dependent claims.

According to a first aspect, there is provided a computer-implemented method, performed in a vehicle, for training a machine learning model. The method comprises obtaining, from one or more sensors of the vehicle, a sensor data sample pertaining to a surrounding environment of the vehicle. The method further comprises generating one or more sensor data embeddings associated with the sensor data sample. The one or more sensor data embeddings are representations of the sensor data sample in a multi-dimensional space, generated by processing said sensor data sample through one or more sensor data encoding networks that have been trained to process sensor data samples and to output corresponding sensor data embeddings in the multi-dimensional space. The method further comprises determining whether the sensor data sample meets a defined relevance criterion. The method further comprises, in response to the sensor data sample meeting the defined relevance criterion, training the machine learning model, using the sensor data sample, thereby generating a local update of the machine learning model. The method further comprises transmitting, to a remote entity, information indicative of the local update of the machine learning model and the one or more sensor data embeddings. With this aspect of the disclosed technology, similar advantages and preferred features are present as in the other aspects.

According to a second aspect, there is provided a computing device for training a machine learning model in a vehicle. The computing device comprises control circuitry. The control circuitry is configured to obtain, from one or more sensors of the vehicle, a sensor data sample pertaining to a surrounding environment of the vehicle. The control circuitry is further configured to generate one or more sensor data embeddings associated with the sensor data sample. The one or more sensor data embeddings are representations of the sensor data sample in a multi-dimensional space, generated by processing said sensor data sample through one or more sensor data encoding networks that have been trained to process sensor data samples and to output corresponding sensor data embeddings in the multi-dimensional space. The control circuitry is further configured to determine whether the sensor data sample meets a defined relevance criterion. The control circuitry is further configured to, in response to the sensor data sample meeting the defined relevance criterion, train the machine learning model, using the sensor data sample, thereby generating a local update of the machine learning model. The control circuitry is further configured to transmit, to a remote entity, information indicative of the local update of the machine learning model and the one or more sensor data embeddings. With this aspect of the disclosed technology, similar advantages and preferred features are present as in the other aspects.

According to a third aspect, there is provided a vehicle comprising the computing device according to any embodiment of the second aspect. With this aspect of the disclosed technology, similar advantages and preferred features are present as in the other aspects.

According to a fourth aspect, there is provided a computer-implemented method for training a machine learning model. The method comprises obtaining, from one or more vehicles, information indicative of one or more local updates of the machine learning model generated through training the machine learning model on sensor data samples obtained in the respective vehicle, and one or more sensor data embeddings associated with the sensor data samples used in said training. Each sensor data embedding is a representation of said sensor data sample in a multi-dimensional space, generated by processing said sensor data sample through one or more sensor data encoding networks that have been trained to process sensor data samples and to output corresponding sensor data embeddings in the multi-dimensional space. The method further comprises storing the one or more sensor data embeddings as documentation information for the training of the machine learning model. With this aspect of the disclosed technology, similar advantages and preferred features are present as in the other aspects.

According to a fifth aspect, there is provided a computing device for training a machine learning model. The computing device comprises control circuitry. The control circuitry is configured to obtain, from one or more vehicles, information indicative of one or more local updates of the machine learning model generated through training the machine learning model on sensor data samples obtained in the respective vehicle, and one or more sensor data embeddings associated with the sensor data samples used in said training. Each sensor data embedding is a representation of said sensor data sample in a multi-dimensional space, generated by processing said sensor data sample through one or more sensor data encoding networks that have been trained to process sensor data samples and to output corresponding sensor data embeddings in the multi-dimensional space. The control circuitry is further configured to store the one or more sensor data embeddings as documentation information for the training of the machine learning model. With this aspect of the disclosed technology, similar advantages and preferred features are present as in the other aspects.

According to a sixth aspect, there is provided a computer program product comprising instructions which when the program is executed by a computing device, causes the computing device to carry out the method according to any embodiment of the first aspect or the method according to any embodiment of the fourth aspect. According to an alternative embodiment of the sixth aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first or fourth aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that it can provide for an automated and decentralized development flow of the machine learning model by utilizing the fleet, while directing its actions through provided sensor data embeddings, and supporting documentation and control for centralized evaluation and re-training of the model.

It may be further advantageous in that it can decrease the development time, by a targeted learning approach.

Documentation of the decentralized learning scheme is further advantageous in that it can enable contribution tracking (e.g. information about which vehicles or data sources influence the local updates the most), incentive mechanisms (e.g. to promote further development), activity logging (e.g. maintaining detailed records of training events), compliance management (e.g. ensuring that all training activities are recorded to meet regulatory or legal obligations), model documentation (e.g. recording the complete history of how the model evolves over time, including intermediate versions), and reproducibility and verification (e.g. enabling future validation activities by preserving complete and trustworthy records of the training lifecycle).

A further associated advantage is that data transfer and storage can be done in a more efficient way. For instance, the sensor data embeddings provide for a space-efficient representation of the data used during training, which also improves data privacy aspects. The disclosed technology further provides for sending and storing mainly the sensor data samples that are used, and contributes the most to the improved performance of the machine learning model, to thereby use the available bandwidth in a more efficient way.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments;
Figure 2A to 2D are schematic flowchart representations of another method, in accordance with some embodiments;
Figure 3 is a schematic illustration of a computing device, in accordance with some embodiments;
Figure 4 is a schematic illustration of another computing device, in accordance with some embodiments;
Figure 5 is a schematic illustration of a vehicle, in accordance with some embodiments;
Figure 6 is a schematic illustration of a system, in accordance with some embodiments;
Figure 7 is a block diagram illustrating some embodiments of the disclosed technology.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first vehicle could be termed a second vehicle, and, similarly, a second vehicle could be termed a first vehicle, without departing from the scope of the embodiments. The first vehicle and the vehicle are both vehicles, but they are not the same vehicle, unless otherwise stated.

As used herein, the wording "one or more of" a set of elements (as in "one or more of A, Band C" or "at least one of A, Band C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and Band C, A and B, Band C, or A and C.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.

As used herein, the term "if" may be construed to mean "when or "upon" or "in response to" depending on the context. Similarly, the phrase "if it is determined' or "when it is determined" or "in an instance of" may be construed to mean "upon determining" or "in response to determining" or "upon detecting and identifying occurrence of an event" or "in response to detecting occurrence of an event" depending on the context. Accordingly, the phrase "if X equals Y" may be construed as "when X equals Y", "when it is determined that X equals Y", "in response to X being equal to Y", or "in response to detecting/determining that X equals Y" depending on the context.

### Overview

As explained in the foregoing, the disclosed technology relates to a controlled decentralized learning (may also be referred to as distributed learning) of a machine learning model. It is at least partly based on using embedding-based techniques to provide for traceability and documentation of the learning process.

Having control over a decentralized learning process is important for several reasons. It can be used for meeting legal or other regulatory requirements, such as data protection laws that give individuals the right to know how their data is used and to request its removal, which may require identifying and retraining models that relied on such data, or to know what scenarios the model has been trained on. Detailed records of training data also support accountability by allowing investigations into model failures, biases, or other issues, ensuring that models can be audited and certified for use in regulated or safety-critical applications. Furthermore, documenting data can be used for scientific reproducibility, enabling models to be revalidated or benchmarked consistently over time, or even complete re-training to support a case of architectural improvements. From an operational perspective, knowing which data was used allows developers to identify gaps, improve data quality, and manage model versions more effectively, especially in distributed environments where data sources are highly diverse and decentralized. Finally, clear documentation fosters transparency and public trust by making it possible to explain how models were trained and to demonstrate that ethical and legal standards have been upheld throughout the process.

In short, the disclosed technology provides solutions to the above by running local training in the edge nodes (i.e. vehicles). Optionally, it measures key performance indexes (KPIs) after the training and iterate the process as many times as needed. When the training is done, or when a certain performance increase is achieved, embeddings representing the sensor data samples used during training can be transmitted to a centralized training entity, together with the model updates, to e.g. support centralized re-training, training traceability, or improving performance. The disclosed technology further provides an efficient data management system across the fleet and the centralized server.

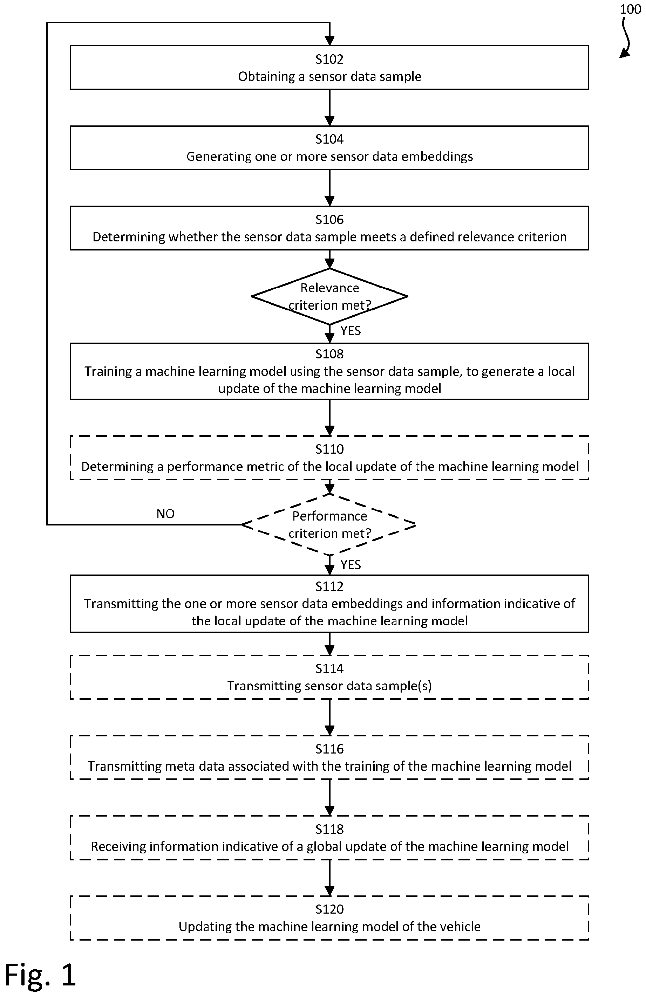

An outcome from this is to automate and decentralize the model development flow by utilizing the fleet, while being able to direct its action through provided embeddings, and supporting otherwise not possible control of the decentralized learning by enabling also a centralized evaluation and re-training by providing "source" and documentation. In the following, the disclosed technology will be further described in connection with Figs. 1 to 7.

### Definitions

In the present context, an "Automated Driving System" ("ADS") refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that the distinction between ADAS and AD lies in the level of autonomy and control. ADAS systems are designed to aid and support drivers, while an AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

In the present context, a "sensor" or "sensor device" refers to a specialized component or system that is designed to capture and gather information from the vehicle's surroundings. It may further refer to components for gathering information of the vehicle itself. These sensors play a crucial role in enabling the ADS to perceive and understand their environment, make informed decisions, and navigate safely. Sensors are typically integrated into the autonomous vehicle's hardware and software systems to provide real-time data for various tasks such as obstacle detection, localization, road model estimation, and object recognition. Common types of sensors used in autonomous driving include LiDAR (Light Detection and Ranging), Radar, Cameras, Ultrasonic sensors, inertial measurement unit (IMU), GPS, wheel speed sensors etc. LiDAR sensors use laser beams to measure distances and create high-resolution 3D maps of the vehicle's surroundings based on point clouds. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

The term "sensor data sample" may be interpreted as a specific instance or set of data collected by the sensors installed on the ADS-equipped vehicles at a particular moment in time or within a particular timeframe. The sensor data samples typically comprise various types of information captured by the sensors, such as camera images, lidar output, or radar output.

The sensor data sample may comprise one or more sensor data frames, from one or more sensors. The one or more sensors may be of one or more sensor types, and/or one or more instances of the same sensor type. The sensor data sample may thus span over a sequence of time. In other words, the sensor data sample may be a sensor data sequence. Thus, the sensor data sample may comprise sensor recordings for a number of seconds.

A sensor data sample may further comprise other types of associated data, such as GPS coordinates, accelerometer readings, and other sensor-generated data. The "sensor data samples" may include connected meta data (e.g., timestamps, location information, vehicle information, log duration, etc.).

The wording "machine learning model" (may also be referred to as machine-learning algorithm, (artificial) neural network, deep learning network, network and so forth) as used herein, refers to any computational system or algorithm that is trained on data to make predictions, decisions or otherwise generate an output, e.g. by learning patterns and relationships from training data and applying that knowledge on new input data.

Deployment of such networks typically involves a training phase where the network learns from labeled or unlabeled training data to achieve accurate predictions during the subsequent inference phase. The training data (and input data during inference) may e.g. be an image, or sequence of images, LIDAR data (i.e. a point cloud), radar data, or any other form of data. Furthermore, the training/input data may comprise a combination or fusion of one or more different data types. Additionally, or in combination, it may comprise a combination or fusion of two or more instances of the same data types, such as two or more images from different cameras.

Networks or machine learning models may be implemented in some embodiments using publicly available suitable software development machine learning code elements, for example, such as those which are available in Pytorch, TensorFlow, and Keras, or in any other suitable software development platform, in any manner known to be suitable to someone of ordinary skill in the art.

The wording "encoding network" may herein be understood as a neural network trained specifically for encoding input data, and to output a corresponding encoded representation (or "embedding"). More specifically, the term encoding network (more specifically referred to as "embedding network", "embedding neural network", or "embedding artificial neural network") refers to a computational model or set of techniques that are used to enable a computer to generate an embedding for an input data sample (e.g. sensor data or sensor data samples). In turn, an "embedding" may be understood as a mathematical (or numerical) representation of said input data. In more detail, the "encoding network" is used to transform data from one representation space into another (herein referred to as the multi-dimensional (vector) space) while preserving meaningful relationships between the input data points.

Embedding networks are, for example, used for tasks like natural language processing (NLP) and computer vision. These networks take raw input data, such as words in a sentence or pixels in an image, and convert them into fixed-size, numerical vectors (embeddings) that capture essential characteristics or features of the input data. In more detail, in NLP, the embedding networks convert words into numerical vectors, where words with similar meanings or contextual usage are represented closer to each other in the embedding space (may also be referred to as multi-dimensional space or latent space). Similarly, in computer vision, the embedding networks convert images to numerical vectors, enabling the network to understand visual similarities, like grouping similar objects or scenes closer together in the embedding space (multi-dimensional space).

The encoding network may comprise layers of neural network architecture, often employing techniques like convolutional layers, recurrent layers, fully connected layers, attention layers, or transformer layers, to learn and extract meaningful patterns from the input data. The encoding networks may be trained through processes like supervised learning, unsupervised learning, semi-supervised learning, or self-supervised learning to optimize the embeddings for specific downstream tasks, such as classification, clustering, or recommendation.

In the present disclosure, reference is made to various encoding networks, namely "sensor data encoding networks" and "query encoding networks". In this context, the terms "sensor data" and "query" are to be understood as labels to indicate the purpose, function, or capability of the encoding networks. More specifically, the sensor data encoding network may be configured to generate embeddings for sensor data samples, whereas the query encoding network may be configured to generate embeddings for queries. It should be further noted that a sensor data encoding network may be configured to generate embeddings for a specific sensor data type. In other words, one sensor data encoding network may be configured to generate embeddings for image data, while another sensor data encoding network may be configured to generate embeddings for LiDAR data. However, in some embodiments, a sensor data encoding network may be configured to process sensor data of more than one sensor data type, and thus be configured to generate embeddings for several sensor data types.

The various encoding networks may however be trained to generate embeddings in the same embedding space (i.e. the same multi-dimensional space) so that embeddings (generated by different encoding networks) that are contextually, spatially and/or temporally related point towards the same point within the multi-dimensional space. The term "point towards the same point within the multi-dimensional space" should in the present context be interpreted broadly and encompass "point in substantially the same direction within the multi-dimensional space" or "point towards substantially the same point within the multi-dimensional space" and so forth. In more detail, having two embedding vectors pointing towards the same point or in the same direction, one can infer a relationship between the two underlying data samples. For example, if one has two embedding vectors, one can calculate how close they are to pointing towards the same point or how close they are to pointing in the same direction in order to determine a relationship between the underlying data samples, where the closer they are to pointing towards the same point or the same direction, the more likely it is that the underlying data samples relate to the same object or scene.

This may for example be done by training a first encoding network, to generate embeddings in a multi-dimensional space, based on input data from a first data source. Then, each of the other encoding networks are trained "against" or in association with the first encoding network so that the embeddings of the other networks that are contextually, spatially and/or temporally related with the embeddings of the first encoding network point towards the same point within the multi-dimensional space as the related embeddings of the first encoding network. For example, if the first encoding network is trained to generate image embeddings for camera images and a second encoding network is intended to generate embeddings e.g. for Lidar data, then the second encoding network may be trained by feeding the second encoding network with lidar data of a scene where corresponding image embeddings (of that scene) will be used as basis for forming a ground-truth (desired output). By doing this process for each subsequent encoding network, one may obtain a set of encoding networks capable of ingesting outputs from various data sources and output corresponding embeddings where contextual, spatial and/or temporal relations are represented by the proximity or similarly in direction of the embeddings (vectors) in the multi-dimensional space.

The same holds for training the query encoding network to relate to the same multi-dimensional space. The queries may be of different formats, depending on a specific realization. The queries may e.g. be in the form of a text query, an image query, a video query, etc., or any combination thereof. The queries can thus be understood as any data indicative of a certain scenario of interest. Or in some other way defining some data which is desirable to use in the training of the machine learning model. In some embodiments (e.g. when the query is represented by a sensor data sample), the query encoding network may be a sensor data encoding network. Hence, the query embedding may be generated by the same (or at least a different instance of the same) network as deployed in the vehicle to generate the sensor data embedding.

As further mentioned below, decoding networks may be employed as well. For the decoding networks, the same principles and aspects apply, as for the encoding networks. A difference being that the decoding networks are trained to generate synthetic data from embeddings, such as those output from the encoding networks, as opposed to the other way around. By the wording "synthetic", as in synthetic data, is herein meant synthetic in the sense that it is machine generated (herein by the decoding networks), as opposed to being recorded or otherwise collected data of the real world. The synthetic data can be understood as a reconstruction of the original data used to generate a sensor data embedding.

There are several possible architectures for the decoding network. For example, the decoder-part of AutoEncoders or Variational AutoEncoders, the generator-part of (conditional) Generative Adversarial Networks, and Diffusion Models in which the embedding guides the diffusion process of generating e.g. an image that closely aligns with the information contained in the embedding.

An encoding network and a decoding network may be trained in association with each other, e.g. by being trained together in a loop. Thus, they are trained so as to relate to the same multi-dimensional space. This training process may be referred to as network fusion. The training process may involve feeding a data sample (e.g. an image) through the encoding network to generate an embedding for the data sample. This embedding is then fed through the decoding network which outputs a reconstruction of the original data sample input to the encoding network.

### Embodiments

Figure 1 illustrates a schematic flowchart representation of a computer-implemented method 100, performed in a vehicle, for training a machine learning model. More specifically, the method 100 can be seen as a training process being part of a decentralized (or distributed) training scheme. In other words, it may be a method 100 for decentralized learning of the machine learning model. As mentioned above, this refers to training a model on a number of edge devices. In some cases, this can be referred to as federated learning, swarm learning, or edge/on device learning. The method 100 can thus be seen as the steps performed in one such edge device (herein a vehicle). The same method 100 can thus be performed in a number of different vehicles of a fleet of vehicles.

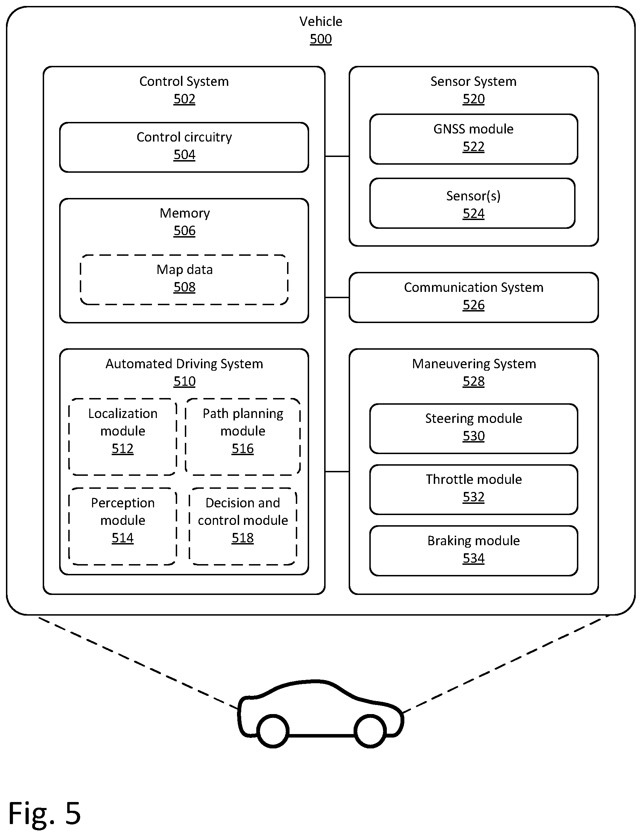

The method 100 may be performed in the vehicle (i.e. by computing resources of the vehicle). The vehicle may be a vehicle equipped with an Automated Driving System (ADS). In such case, the steps of the method 100 may be performed as part of the ADS. However, the method 100 may also be performed by other computational resources available in, or in connection with, the vehicle. An example of a vehicle 500 configured to perform the method 100 is further described below in connection with Fig. 5.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the disclosed technology. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present disclosed technology. Other solutions, uses, objectives, and functions within the scope of the disclosed technology as claimed below should be apparent for the person skilled in the art.

It should further be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the optional steps need to be performed. The optional steps may be performed in any order and in any combination.

The method 100 comprises (i) obtaining S102, from one or more sensors of the vehicle, a sensor data sample pertaining to a surrounding environment of the vehicle. The "surrounding environment" of a vehicle can be understood as a general area around the ego-vehicle in which objects (such as other vehicles, landmarks, obstacles, etc.) can be detected and identified by vehicle sensors (radar, LIDAR, cameras, etc.), i.e. within a sensor range of the vehicle.

The sensor data sample may comprise sensor data captured by the one or more sensors of the vehicle. As explained in the foregoing, the sensor data sample may comprise one or more sensor data frames, from the one or more sensors of the vehicle. The sensor data sample may thus depict the surrounding environment over a time sequence. As an example, the sensor data sample may comprise image data captured by a camera of the vehicle, LiDAR data captured by a LiDAR sensor, radar data captured by a radar, etc. More specifically, the sensor data sample may comprise one or more of image data, LIDAR data, radar data, and ultrasonic data.

The sensor data of the sensor data sample may be raw sensor data, or processed sensor data. The senor data may e.g. be processed before being transmitted to the remote entity. The sensor data may e.g. be processed for compression or privacy protection (e.g. being anonymized by removing sensitive user information such as faces of people of license plates).

The method 100 further comprises (ii) generating S104 one or more sensor data embeddings associated with the sensor data sample. The one or more sensor data embeddings are generated by processing said sensor data sample through one or more sensor data encoding networks, that have been trained to process sensor data samples and to output corresponding sensor data embeddings in a multi-dimensional space. The one or more sensor data embeddings are thus representations of the sensor data sample in the multi-dimensional space. In case the sensor data sample comprises sensor data from a plurality of sensors, one sensor data embedding may be generated for each sensor. In such case, each sensor data encoding network of the one or more sensor data encoding networks may be associated with a respective sensor (or a respective sensor type). Alternatively, or in combination, a sensor data embedding may be generated for more than one sensor. In other words, a combined sensor data embedding may be generated for sensor data from a plurality of sensors.

The method 100 further comprises (iii) determining S106 whether the sensor data sample meets a defined relevance criterion. The relevance criterion may serve as a decider for which sensor data samples to train on. In other words, a fulfillment of the relevance criterion (i.e. the sensor data sample meets the relevance criterion) may be used as a trigger for performing learning of the machine learning model. The relevance criterion may e.g. be defined through embeddings-matching, performance evaluation, etc., as will be further explained below.

Fulfillment of the relevance criterion can e.g. be indicative of the sensor data sample being of relevance for use in training of the machine learning model. For example, the sensor data sample may meet the defined relevance criterion in case the sensor data sample represents a scenario of interest for further development of the machine learning model. A scenario of interest may e.g. be a new or not previously experienced scenario, or a scenario where the machine learning model is lacking in performance. In the context of ADS development, the scenario refers to a driving scenario.

In some embodiments, the relevance criterion is based on a proximity between the one or more sensor data embeddings and a query embedding. The query embedding can be generated by processing a query through a query encoding network that has been trained to process queries and to output a corresponding query embedding in the multi-dimensional vector space. The query encoding network may be trained in association with one or more of the sensor data encoding networks such that a query embedding of a query that is contextually related to a specific sensor data sample points towards the same point as the one or more sensor data embeddings of that sensor data sample within the multi-dimensional vector space.

Determining S106 whether the sensor data sample meets the defined relevance criterion may thus comprise determining whether the one or more sensor data embeddings are within a distance value from the query embedding, in the multi-dimensional space.

The query may correspond to an identified area of poor performance of the machine learning model. This area can then be mapped to the embedding space (i.e. the multi-dimensional space), e.g. as a single embedding, as a set of embeddings, or as a subspace within the embedding space. The query may thus be seen as a location of poor performance in the embedding space. To find sensor data samples which fall within this area of poor performance, embedding-matching can be employed in the vehicle, as explained above. One or more query embeddings can be transmitted to the vehicle, and when a new sensor data sample has been obtained, one or more sensor data embeddings generated for said sensor data sample can be compared with the one or more query embeddings. If one or more of the sensor data embeddings are close enough (e.g. in view of the distance threshold) to a query embedding (or lies within a certain subspace within the embedding space), the associated sensor data sample can be found to be of relevance for use in training the model to reduce the model's lack of performance in this area.

The distance value (or distance threshold) may be predefined. In some embodiments the distance value is dynamically set. For example, the distance value may be dynamically set by the query directly or indirectly (e.g., metadata associated with the query). In more detail, the query may include some operators or commands that define distance value such as e.g., "small" (or "narrow"), "medium", "large" ("or "broad"). Alternatively, the operators or commands may be set in the metadata of the query through which the query is generated. The comparison may then account for the operators or commands when searching for matching sensor data embeddings. Moreover, the term "within a distance value" may be construed as "fulfilling a distance metric", where the distance metric may be that the embeddings fulfilling the metric are the embeddings that are within a Euclidian/Manhattan/Cosine distance value (e.g., distance threshold) from the query embedding.

Alternatively, or in combination, the relevance criterion may be based on a performance metric of the machine learning model. For example, a sensor data sample may be considered to be of relevance (i.e. meeting the relevance criterion) if the machine learning model performs badly (i.e. performs below some desired performance level) on a certain sensor data sample (or scenario depicted by the sensor data sample). In some embodiments, a reference model may be run in parallel with the machine learning model to be trained. The reference model may e.g. be a machine learning model specialized on some specific data/information. If detecting that the machine learning model to be trained performs worse than the reference model on a certain sensor data sample, this can be used as an indication that the sensor data sample is of relevance for further training of the machine learning model.

In response to the sensor data sample meeting the defined relevance criterion, the method 100 further comprises (iv) training S108 the machine learning model, using the sensor data sample, thereby generating a local update of the machine learning model. During the step of training S108 the machine learning model, the vehicle locally executes a training procedure using the obtained sensor data sample as training data. The locally executed training step then results in an updated set of parameters of the machine learning model, which forms the local update of the machine learning model. The training S108 may e.g. be performed through unsupervised, semi-supervised, supervised, or self-supervised learning, depending on the task of the machine learning model. For instance, if the machine learning model is associated with a task of trajectory planning based on the perceived environment, it may be trained through comparing the model's output with how the driver operates the vehicle during manual operation. In other words, the actions of the driver may be used as a ground truth for training the machine learning model. It is, however, to be noted that other ways of training the machine learning model are possible as well.

The method 100 further comprises transmitting S112, to a remote entity, the one or more sensor data embeddings and information indicative of the local update of the machine learning model. The remote entity may herein be understood as a remote (to the vehicle) server, or any other centralized entity, tasked with managing and aggregating the decentralized learning. Such a server will be further explained below. In other words, the sensor data embeddings associated with the sensor data samples which were used in training S108 the machine learning model, may be transmitted to the remote entity.

As used herein, the expression "information indicative of the local update of the machine learning model" is intended to refer broadly to any data, or representation that enables the update, replacement, reconstruction, or deployment of the updated machine learning model. Such information may include, without limitation, updated model parameters or weights, the complete architecture and associated parameters of the model, differential updates (such as weight deltas or parameter adjustments relative to a previous version of the machine learning model), or references or identifiers (such as file paths, links, or version identifiers) that allow retrieval of the updated model. The information indicative of the local update may thus represent a partial update applicable to an existing model instance or may define a complete model intended to replace a previous version in its entirety. The same applies also to the information indicative of a global update of the machine learning model, as further explained below.

The method 100 may further comprise (v) determining S110 a performance metric of the local update of the machine learning model. The method 100 may then further comprise repeating the steps denoted (i) to (v) until the performance metric of the local update of the machine learning model meets a defined performance requirement. Put differently, the performance of the local update of the machine learning model may be evaluated in the vehicle, before finishing the local training. The machine learning model may be evaluated on further sensor data samples recorded in the vehicle, or on a live-data stream recorded by the one or more sensors of the vehicle. For example, the machine learning model may be run in shadow-mode, and evaluated against the driver's actions, or against a reference machine learning model, deployed in the vehicle.

The performance metric shall herein be interpreted broadly and may encompass any measurable value or indicator that quantifies the behavior, accuracy, efficiency, or quality of a machine learning model when applied to its given task. The performance metric may be defined by one or more key-performance-indexes (KPIs). The performance metric may include, but is not limited to, statistical measures such as classification accuracy, precision, recall, F1 score, mean squared error (MSE), etc. The performance metric may be determined based on validation data, test data, live operational data, or other evaluation scenarios, and may serve to assess whether the model meets the defined performance requirement. The defined performance requirement may be defined as a certain level of performance increase, e.g. as compared to a previous version of the machine learning model.

Repeating the steps (i) to (v) may thus involve obtaining a further sensor data sample, generating one or more sensor data embeddings associated with said further sensor data sample, and if meeting the relevance criterion, training the machine learning model on the further sensor data sample. This can then be repeated for a number of iterations, until the performance requirement has been met.

Transmitting S112 the information indicative of the local update of the machine learning model and the one or more sensor data embeddings may then be performed provided that the defined performance requirement is met. In other words, the one or more sensor data embeddings and the information indicative of the local update of the machine learning model may be transmitted S112 in response to the defined performance requirement has been met.

It should be noted that other metrics (other than the performance metric described above) for determining when to terminate the local training of the machine learning model, and to transmit the local update of the model may be applicable as well. As an example, the metric may be associated with an amount of time since initiating the local training, or since last reporting a local update, or a number of training samples having been used to generate the local update. In other words, the steps (i) to (v) may be repeated for a certain amount of time, or for a defined number of iterations.

During the iterative learning of the machine learning model, the sensor data samples used in the training may be stored in the vehicle, together with the associated sensor data embeddings. The sensor data samples may be stored at least temporarily, until the local training is finished. In some embodiments, only the sensor data embeddings may be stored. Optionally, the sensor data samples may be transmitted to the remote entity and then removed from the local storage in the vehicle. This may help in managing data storage locally in the vehicle.

In some embodiments, the method comprises transmitting S114, to the remote entity, the sensor data samples which, when used in training the machine learning model, resulted in an increase of the performance metric above a defined threshold. In other words, those sensor data samples which yielded a performance increase above the defined threshold may be transmitted to the remote entity.

Alternatively, or in combination with the above, the sensor data embeddings associated with the sensor data samples which, when used in training the machine learning model, resulted in an increase of the performance metric above a defined threshold may be transmitted, as part of step S112, to the remote entity. In other words, only those sensor data embeddings which are associated with the sensor data samples which yielded performance increase over the defined threshold may be transmitted S112 to the remote entity.

In a case where the sensor data samples have been transmitted to the remote entity in advance, the later transmitted sensor data embeddings of the "best training samples" (i.e. those sensor data samples which resulted in the performance increase above the defined threshold) may enable the correct sensor data samples to be retrieved, e.g. in case the machine learning model shall be retrained. The sensor data samples stored at the remote entity, and which are not associated with any sensor data embeddings transmitted by the vehicle, may then be removed from storage.

The method 100 may further comprise transmitting S116, to the remote entity, meta data associated with the training of the machine learning model, performed in the vehicle. The meta data may e.g. comprise information such as which sensor data samples have been used in training the machine learning model, what order the sensor data samples have been used in training of the machine learning model, how they have affected the performance of the machine learning model, etc.

The transmitted one or more sensor data embeddings and/or the transmitted meta data associated with the training of the machine learning model may be stored at the remote entity as documentation information for the training of the machine learning model. In other words, the sensor data embeddings associated with the sensor data samples used in the local training of the machine learning model, and/or the associated meta data can be used as documentation of how the training to generate the local update of the machine learning model was performed. The documentation information may be used for subsequent retraining of the machine learning model, performed by the remote entity. In other words, by having sensor data embeddings and/or the meta data associated with the training performed in the vehicle, the training can be replicated in the remote entity.

The method 100 may further comprise receiving S118, from the remote entity, information indicative of a global update of the machine learning model. The global update of the machine learning model may be based on a number of local updates of the machine learning model, obtained from a plurality of vehicles participating in the training of the machine learning model. In other words, the global update of the machine learning model may be formed by aggregating a number of local updates of the machine learning model, including e.g. the local update generated by the vehicle in question. The method 100 may then further comprise updating S120 the machine learning model of the vehicle, based on the received information indicative of the global update of the machine learning model. In other words, the previous local version of the machine learning model deployed at the vehicle, may be replaced by the global update of the machine learning model. The global update of the machine learning model may then be used in control or operation of the vehicle. Then the process as described above, can be restarted, to generate a new local update of the newly deployed machine learning model.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

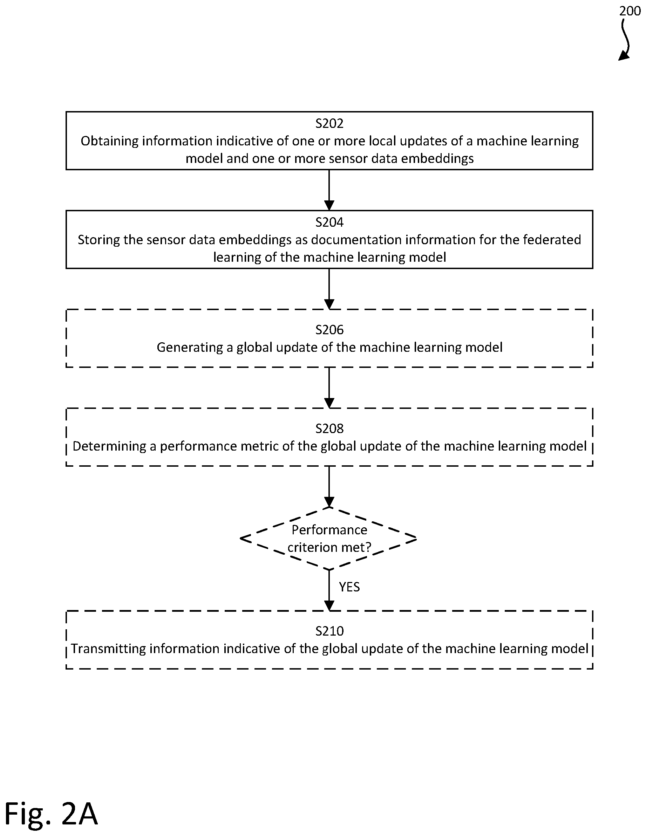

Figure 2A to 2D illustrates a schematic flowchart representation of a computer-implemented method 200, 200', 200", 200‴ for training a machine learning model. Put differently, the method 200, 200', 200", 200‴ may be a method for decentralized learning of the machine learning model. More specifically, it may be a method for performing a part of the decentralized learning of the machine learning model. The method 200, 200', 200", 200‴ may be performed by a remote entity. The remote entity may e.g. be a remote server, data center, centralized computing device or similar, such as the server as further described below. The remote entity can be seen as the entity which is responsible for the centralized aggregation of a decentralized learning process. More specifically, the method 200, 200', 200", 200‴ can be seen as the centralized (or server-side) process of aggregating the local updates from the decentralized learning process. The method 200, 200', 200", 200‴ may thus be seen as a complement to the edge-side method 100 as described above in connection with Fig. 1.

Below, the different steps of the method 200, 200', 200", 200‴ are described in more detail. Even though illustrated in a specific order, the steps of the method 200, 200', 200", 200‴ may be performed in any suitable order as well as multiple times. Thus, although Fig. 2A to 2D may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the disclosed technology. Likewise, software implementations could be accomplished with standard programming techniques with rule-based logic and other logic to accomplish the various steps. Further variants of the method 200, 200', 200", 200‴ will become apparent from the present disclosure. The herein mentioned and described embodiments are only given as examples and should not be limiting to the present disclosed technology. Other solutions, uses, objectives, and functions within the scope of the disclosed technology as claimed below should be apparent for the person skilled in the art.

It should further be appreciated that the method 200, 200', 200", 200‴ of Fig. 2A to 2D comprises some steps which are illustrated as boxes in solid lines and some steps which are illustrated in dashed lines. The steps which are shown in solid lines are steps which are comprised in the broadest example embodiment of the method 200, 200', 200", 200‴. The steps which are comprised in dashed lines are examples of a number of optional steps which may form part of a number of alternative embodiments. It should be appreciated that the optional steps need not be performed in order. Furthermore, it should be appreciated that not all of the optional steps need to be performed. The optional steps may be performed in any order and in any combination. In particular, Fig. 2A to 2D each illustrates a number of optional steps of the method 200, 200', 200", 200‴. For illustrative reasons, these are illustrated in separate figures. It is however to be noted that one or more of the optional steps presented in connection with one of Fig. 2A to 2D may be combined with one or more of the optional steps presented in connection with another one of Fig. 2A to 2D, unless otherwise stated.

The method 200, 200', 200", 200‴ comprises obtaining S202, from one or more vehicles, information indicative of one or more local updates of the machine learning model generated through training the machine learning model on sensor data samples obtained in the respective vehicle, and one or more sensor data embeddings associated with the sensor data samples used in said training. In other words, local updates from a fleet of vehicles can be obtained S202, where each local update of the machine learning model is generated from decentralized learning across the fleet of vehicles. The local updates may be received together with the sensor data embeddings representing the sensor data samples used in the local training of the machine learning model.

The fleet of vehicles may be a selected number of vehicles from a larger fleet of vehicles. The selected vehicles can be vehicles selected for participation in the decentralized learning, and chosen e.g. based on standard client selection techniques known in the art of decentralized learning. The meta data associated with the training of the machine learning model performed in each vehicle can be used for enriching the selection process such that the training process can be enhanced even further or in a faster cycle. For example, vehicle can be selected as those that have increased the model performance more significantly in previous steps. In another example, the vehicles may be selected based on geographical location of the vehicles. For example, vehicles driving in certain geographical areas where the model's performance needs to be improved can be selected.

In some embodiments, the step of obtaining S202 may comprise obtaining information indicative of a local update of the machine learning model and one or more sensor data embeddings associated with the sensor data samples used in generating the local update, according to the method 100 as described in the foregoing. In other words, the one or more local updates of the machine learning model may each be generated by through the method 100 as described in connection with Fig. 1. Thus, the methods 100, 200, 200', 200", 200‴ described herein, can be seen as two interrelated methods (e.g. client-server, or transmitter-receiver). Hence, any features, principles, or advantages described in connection with one of the methods 100, 200, 200', 200", 200‴, apply correspondingly to the other method, unless otherwise stated.

As explained above, each sensor data embedding is a representation of the sensor data sample in a multi-dimensional space, generated by processing said sensor data sample through one or more sensor data encoding networks that have been trained to process sensor data samples and to output corresponding sensor data embeddings in the multi-dimensional space.

The method 200, 200', 200", 200‴ further comprises storing S204 the one or more sensor data embeddings as documentation information for the training of the machine learning model. In other words, the sensor data embeddings can be leveraged as documentation of the training of the machine learning model. As will be further described below, the documentation data may e.g. be used for subsequent retraining of the machine learning model. Optionally, the method 200, 200', 200", 200‴ may further comprise receiving meta data associated with the training of the machine learning model. This meta data may be stored as additional documentation information for further development of the machine learning model.

Looking at Fig. 2A, there is further shown an optional process of generating and distributing a global update of the machine learning model. The method 200, 200', 200", 200‴ may further comprise generating S206 a global update of the machine learning model based on the information indicative of the local updates of the machine learning model. Put differently, the one or more local updates of the machine learning model may be aggregated (or consolidated) into one global update of the machine learning model. The global update of the machine learning model may be generated S206 through various aggregation or consolidation techniques, such as model parameter averaging, weighted model parameter averaging, etc., which is commonly known in the art of decentralized learning. In other words, the generation of the global update may be done through any standard techniques for model aggregation in decentralized learning schemes.

The wording "global" and "local", as in "global update" and "local update", may herein be understood as an indication of from where the update stems. The global update (may also be referred to as central update) stems from the centralized entity of the decentralized learning scheme. The global update can be distributed across the fleet of vehicles, thus being deployed "globally". In contrast, the local update refers to an update generated in one of the vehicles of the fleet of vehicles. I.e. in one of the local entities in the decentralized learning scheme. The local update of the machine learning model is thus "local" in the sense that it relates to one of the vehicles.

The method 200, 200', 200", 200‴ may then further comprise transmitting S210 information indicative of the global update of the machine learning model to the one or more vehicles. This can be seen as deploying the global update of the machine learning model (i.e. an updated version of the machine learning model) in the fleet of vehicles, that is the one or more vehicles. The global update of the machine learning model can thus replace any existing versions of the machine learning model currently deployed at the vehicles.

In some embodiments, the method 200, 200', 200", 200‴ further comprise determining S208 a performance metric of the global update of the machine learning model, and transmitting S210 the global update of the machine learning model provided that the performance metric of the global update of the machine learning model meets a defined performance criterion. In other words, the global update of the machine learning model may be evaluated based on (or in view of) the performance metric, and distributed to the one or more vehicles once it meets the defined performance criterion. Thereby, the remote entity can collect and aggregate local updated from the one or more vehicles until a desired performance increase of the updated global model has been reached. Until the desired performance increase has been reached, the steps denoted S202 and S204 may be repeated to collect additional local updates of the machine learning model, and a new global update may be generated S206 based on the additional local updates.

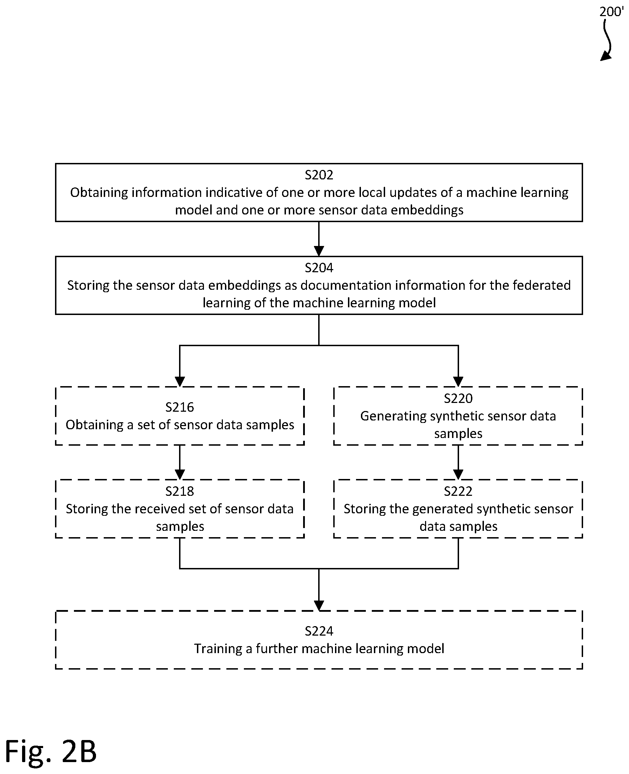

Looking at Fig. 2B, there is shown an additional optional process of training a further machine learning model. This can be seen as a process of completely retraining the machine learning model from scratch (i.e. from a re-initialized state), or training a new machine learning model by reapplying the same training procedure previously used. Advantageously, this allows for the development of a further machine learning model that may have a modified or entirely different architecture compared to the earlier model, while benefiting from insights or parameters derived from the prior training. Such an approach may be particularly beneficial when incremental architectural modifications are introduced with the aim of enhancing model performance, stability, or efficiency. In this process, the documentation information stored for the earlier training of the machine learning model can be utilized.

More specifically, the method 200, 200', 200", 200‴ may further comprise obtaining S216 a set of sensor data samples used in training the machine learning model to generate each of the local updates of the machine learning model, and storing S218 the received set of sensor data samples. In other words, the sensor data samples to which the obtained sensor data embeddings are associated can be obtained S216. The sensor data samples may be received from the respective vehicle. Optionally, the step of obtaining the sensor data samples may comprise transmitting a request for the sensor data samples to the respective vehicle, and receiving the sensor data samples in response to said request. Alternatively, or in combination, the sensor data samples may be retrieved from a storage connected to the remote entity, such as a database of sensor data samples. The sensor data samples may e.g. be retrieved by querying the database based on the one or more sensor data embeddings.

Alternatively, or in combination with the above, the method 200, 200', 200", 200‴ may further comprise generating S220 synthetic sensor data samples from the stored sensor data embeddings. Generating the synthetic sensor data samples may be done by processing the sensor data embeddings through one or more decoding networks that has been trained to process sensor data embeddings and to output corresponding synthetic data for each sensor data embedding. Each of the one or more decoding networks has been trained in association with at least one of the one or more encoding networks so as to relate to the same multi-dimensional space. The method 200, 200', 200", 200‴ may further comprise storing S222 the synthetic sensor data samples. The synthetic sensor data samples may thus be seen as reconstructed sensor data generated based on the sensor data embeddings.

The method 100 may then further comprise training S224 the further machine learning model in view of the stored documentation information. More specifically, the further machine learning model may be trained S224 using the obtained sensor data samples and/or the synthetic sensor data samples.

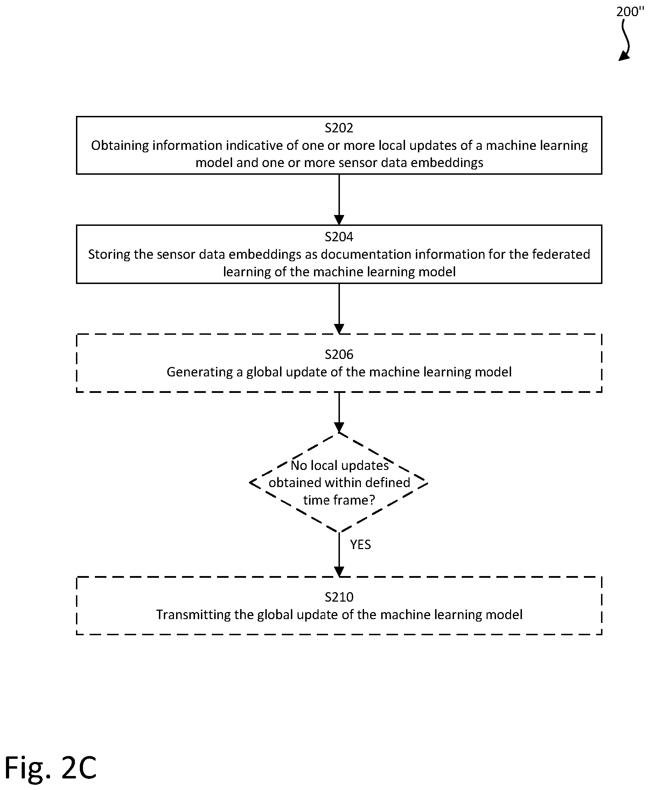

Looking at Fig. 2C, there is shown an additional optional process of leveraging available information for determining when the model is performing well within a certain operational design domain (ODD). More specifically, if detecting that no further performance increases (i.e. local updates of the machine learning model being reported by the vehicles) have been obtained for a certain amount of time, this can be used as an indication that the machine learning model performs well within its ODD.

The term "Operational Design Domain" may be understood as the specific operating conditions and environments in which an ADS or autonomous vehicle is intended to function safely and effectively. It defines the boundaries within which the system (or a specific feature thereof) is designed and validated to operate. The ODD conditions may be divided into external ODD conditions and internal ODD conditions. Here, the external ODD conditions may refer to external factors or environmental elements that impact the operation of the automated driving system. The internal ODD conditions may refer to the capabilities and limitations inherent to the autonomous vehicle or the ADS itself.

The external ODD conditions may include geographical limits defining the geographic area or region where the ADS is intended to operate, such as urban areas, highways, or specific cities. The external ODD conditions may include environmental factors including conditions like weather (rain, snow, fog, etc.), lighting conditions (daylight, night-time), and various terrains (mountainous, urban, rural) that affect the ADS's sensors and perception systems. The external ODD conditions may include road infrastructure comprising the types of roads, lanes, intersections, signage, and road markings the ADS is designed to navigate. The external ODD conditions may include traffic conditions comprising variations in traffic density, behavior of other vehicles, pedestrians, and cyclists.

The internal ODD conditions may include sensor capability parameters, such as e.g., the range, accuracy, and reliability of sensors such as cameras, LiDAR, radar, and other perception systems. The internal ODD conditions may include processing and decision-making parameters comprising computing power and algorithms used for interpreting sensor data, making driving decisions, and controlling the vehicle. The internal ODD conditions may include functional capability parameters comprising the specific capabilities of the ADS, including its ability to handle complex traffic situations, navigate intersections, change lanes, park, and perform emergency maneuvers.

An ADS feature (or function) associated with the machine learning model may thus have a defined ODD. The ODD can be represented by a sub-space or area within the embedding space. Thus, the training of the machine learning model may be performed for a defined sub-space of the multi-dimensional space representing an operational design domain of an ADS feature associated with the machine learning model. In other words, the one or more vehicles may be instructed to perform decentralized learning on scenarios within this sub-space.

As explained in the foregoing, obtaining S202 the information indicative of the local updates of the machine learning model may be received from the one or more vehicles in response to the local updates of the machine learning model resulting in an increase of the performance metric of the machine learning model above a defined threshold. Put differently, local updates are reported from the vehicle when they contribute to some performance increase of the model.

Then, the step of transmitting S210 the global update of the machine learning model may be performed provided that no new information indicative of a local update of the machine learning model within the defined sub-space has been obtained within a defined time frame. In other words, the decentralized learning can be concluded, and the ADS feature associated with the machine learning model can be launched (or deployed) in the fleet, when no new local updates have been received for some time (i.e. within the defined time frame.

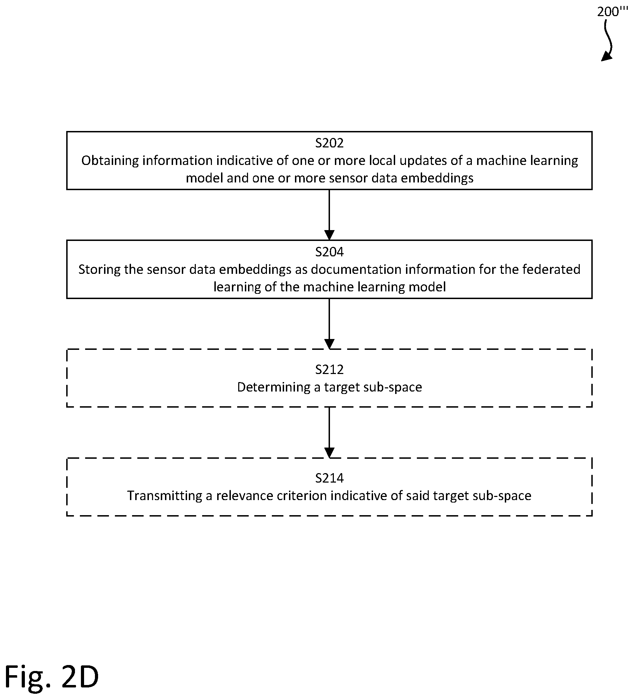

Looking at Fig. 2D, there is shown an additional optional process of updating a triggering mechanism of the decentralized learning scheme, through transmitting a (updated) relevance criterion.

The method may further comprise determining S212 a target sub-space within the multi-dimensional space, based on an existence of stored sensor data embeddings within said sub-space and/or a performance metric of the global update of the machine learning model on sensor data samples associated with sensor data embeddings within said sub-space. The target sub-space may be seen as a target for the decentralized learning, i.e. what sensor data samples the machine learning model should be trained on. The target sub-space may e.g. be determined as a sub-space which is not covered by the existing sensor data embeddings, or which does not have enough sensor data embeddings. This can thus be seen as identifying a set of scenarios which are not covered by the available sensor data samples. Alternatively, or in combination, the target sub-space can be determined as an area where the global update of the machine leaning model lacks in performance. I.e. an area where the machine learning model could benefit of more training.

The method 200, 200', 200", 200‴ may further comprise transmitting S214 a relevance criterion indicative of said target sub-space, to the one or more vehicles. The relevance criterion may thus comprise a query embedding, a set of query embeddings, or in any other way be indicative of the target sub-space. The relevance criterion may thus serve as a trigger for defining which sensor data samples the machine learning model should be trained on.

Executable instructions for performing these functions are, optionally, included in a non-transitory computer-readable storage medium or other computer program product configured for execution by one or more processors.

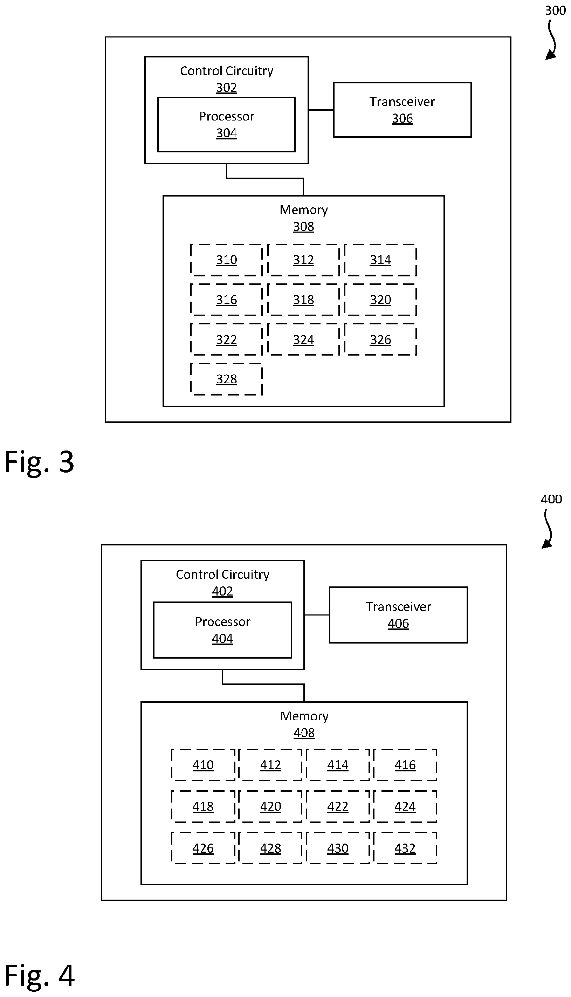

Figure 3 is a schematic illustration of a computing device 300, in accordance with some embodiments of the disclosed technology. The computing device 300 may be configured to perform the method 100 as described in connection with Fig. 1. Thus, the computing device 300 may be a computing device 300 for training a machine learning model in a vehicle.

The computing device 300 as described herein, refers to a computer system, or any device or general computing system configured to perform various functions. Even though the computing device 300 is herein illustrated as one device, the computing device 300 may be a distributed computing system, formed by a number of different devices. The computing device 300 may be provided as part of the vehicle. Such a vehicle is further described below, in connection with Fig. 5.

The computing device 300 comprises control circuitry 302. The control circuitry 302 may physically comprise one single circuitry device. Alternatively, the control circuitry 302 may be distributed over several circuitry devices.

As shown in the example of Fig. 3, the computing device 300 may further comprise a transceiver 306 and a memory 308. The control circuitry 302 being communicatively connected to the transceiver 306 and the memory 308. The control circuitry 302 may comprise a data bus, and the control circuitry 302 may communicate with the transceiver 306 and/or the memory 308 via the data bus.

The control circuitry 302 may be configured to carry out overall control of functions and operations of the computing device 300. The control circuitry 302 may include a processor 304, such as a central processing unit (CPU), microcontroller, or microprocessor. The processor 304 may be configured to execute program code stored in the memory 308, in order to carry out functions and operations of the computing device 300. The control circuitry 302 is configured to perform the steps of the method 100 as described above in connection with Fig. 1. The steps may be implemented in one or more functions stored in the memory 308.

The transceiver 306 is configured to enable the computing device 300 to communicate with other entities, such as other devices. The transceiver 306 may both transmit data from and receive data to the computing device 300. The computing device 300 may e.g. be part of a vehicle. The transceiver 306 may then allow the computing device 300 to communicate with other systems of the vehicle, or with external entities, such as other vehicles, or remote entities, such as a remote server.

The memory 308 may be a non-transitory computer-readable storage medium. The memory 308 may be one or more of a buffer, a flash memory, a hard drive, a removable media, a volatile memory, a non-volatile memory, a random access memory (RAM), or another suitable device. In a typical arrangement, the memory 308 may include a non-volatile memory for long-term data storage and a volatile memory that functions as system memory for the computing device 300. The memory 308 may exchange data with the circuitry 302 over the data bus. Accompanying control lines and an address bus between the memory 308 and the circuitry 302 also may be present.

Functions and operations of the computing device 300 may be implemented in the form of executable logic routines (e.g., lines of code, software programs, etc.) that are stored on a non-transitory computer readable recording medium (e.g., the memory 308) of the computing device 300 and are executed by the circuitry 302 (e.g., using the processor 304). Put differently, when it is stated that the circuitry 302 is configured to execute a specific function, the processor 304 of the circuitry 302 may be configured execute program code portions stored on the memory 308, wherein the stored program code portions correspond to the specific function. Furthermore, the functions and operations of the circuitry 302 may be a stand-alone software application or form a part of a software application that carries out additional tasks related to the circuitry 302. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 300 is described.

The control circuitry 302 is configured to obtain (i), from one or more sensors of the vehicle, a sensor data sample pertaining to a surrounding environment of the vehicle. This may be performed e.g. by execution of an obtaining function 310.

The control circuitry 302 is further configured to generate (ii) one or more sensor data embeddings associated with the sensor data sample. This may be performed e.g. by execution of a generating function 312. The one or more sensor data embeddings are representations of the sensor data sample in a multi-dimensional space and generated by processing said sensor data sample through one or more sensor data encoding networks that have been trained to process sensor data samples and to output corresponding sensor data embeddings in the multi-dimensional space.

The control circuitry 302 is further configured to determine (iii) whether the sensor data sample meets a defined relevance criterion. This may be performed e.g. by execution of a first determining function 314.

The control circuitry 302 is further configured to, in response to the sensor data sample meeting the defined relevance criterion, train (iv) the machine learning model, using the sensor data sample, thereby generating a local update of the machine learning model. This may be performed e.g. by execution of a training function 316.

The control circuitry 302 is further configured to transmit, to a remote entity, information indicative of the local update of the machine learning model and the one or more sensor data embeddings. This may be performed e.g. by execution of a first transmitting function 320.

The control circuitry 302 may be further configured to determine (v) a performance metric of the local update of the machine learning model. This may be performed e.g. by execution of a second determining function 318. The control circuitry 302 may be further configured to repeat the steps denoted (i) to (v) until the performance metric of the local update of the machine learning model meets a defined performance requirement. Then, the information indicative of the local update of the machine learning model and the one or more sensor data embeddings may be transmitted provided that the defined performance requirement is met.

The control circuitry 302 may be further configured to transmit, to the remote entity, the sensor data samples which, when used in training the machine learning model, resulted in an increase of the performance metric above a defined threshold. This may be performed e.g. by execution of a second transmitting function 322.

The control circuitry 302 may be further configured to transmit, to the remote entity, meta data associated with the training of the machine learning model, performed in the vehicle. This may be performed e.g. by execution of a third transmitting function 324.

The control circuitry 302 may be further configured to receive, from the remote entity, information indicative of a global update of the machine learning model. This may be performed e.g. by execution of a receiving function 326. The global update of the machine learning model is based on a number of local updates of the machine learning model obtained from a plurality of vehicles participating in the training of the machine learning model.

The control circuitry 302 may be further configured to update the machine learning model of the vehicle, based on the received information indicative of the global update of the machine learning model. This may be performed e.g. by execution of an updating function 328.

It should be noted that the first and second determining function 314, 318 may be implemented as two separate functions, or as one common determining function. Similarly, the first, second and third transmitting function may be implemented as three separate functions, or as one or more common transmitting functions.

It should be further noted that the principles, features, aspects, and advantages of the method 100 as described above in connection with Fig. 1, are applicable also to the computing device 300 as described herein. In order to avoid undue repetition, reference is made to the above. Hence, the control circuitry may be configured to perform any of the steps as described as part of the method 100.

Figure 4 is a schematic illustration of a computing device 400, in accordance with some embodiments of the disclosed technology. The computing device 400 may be configured to perform the method 200, 200', 200", 200‴ as described in connection with Fig. 2A to 2D. Thus, the computing device 400 may be a computing device 400 for training a machine learning model in a remote entity. More specifically, the computing device 400 may be (or at least form part of) a server (may also be referred to as remote server, cloud server, central server, back-office server, fleet server, or back-end server).

Generally, the computing device 400 as described herein, refers to a computer system, or any device or general computing system configured to perform various functions. Even though the computing device 400 is herein illustrated as one device, the computing device 400 may be a distributed computing system, formed by a number of different devices.

The computing device 400 comprises control circuitry 402. The control circuitry 402 may physically comprise one single circuitry device. Alternatively, the control circuitry 402 may be distributed over several circuitry devices.

As shown in the example of Fig. 4, the computing device 400 may further comprise a transceiver 406 and a memory 408. The control circuitry 402 being communicatively connected to the transceiver 406 and the memory 408. The control circuitry 402 may comprise a data bus, and the control circuitry 402 may communicate with the transceiver 406 and/or the memory 408 via the data bus.

The control circuitry 402 may be configured to carry out overall control of functions and operations of the computing device 400. The control circuitry 402 may include a processor 404, such as a central processing unit (CPU), microcontroller, or microprocessor. The processor 404 may be configured to execute program code stored in the memory 408, in order to carry out functions and operations of the computing device 400. The control circuitry 402 is configured to perform the steps of the method 200, 200', 200", 200‴ as described above in connection with Fig. 2A to 2D. The steps may be implemented in one or more functions stored in the memory 408.

The transceiver 406 is configured to enable the computing device 400 to communicate with other entities, such as other devices. The transceiver 406 may both transmit data from and receive data to the computing device 400. The transceiver 406 may then allow the computing device 400 to communicate with external entities, such as a fleet of vehicles.

The memory 408 may be a non-transitory computer-readable storage medium. The memory 408 may be one or more of a buffer, a flash memory, a hard drive, a removable media, a volatile memory, a non-volatile memory, a random access memory (RAM), or another suitable device. In a typical arrangement, the memory 408 may include a non-volatile memory for long-term data storage and a volatile memory that functions as system memory for the computing device 400. The memory 408 may exchange data with the circuitry 402 over the data bus. Accompanying control lines and an address bus between the memory 408 and the circuitry 402 also may be present.

Functions and operations of the computing device 400 may be implemented in the form of executable logic routines (e.g., lines of code, software programs, etc.) that are stored on a non-transitory computer readable recording medium (e.g., the memory 408) of the computing device 400 and are executed by the circuitry 402 (e.g., using the processor 404). Put differently, when it is stated that the circuitry 402 is configured to execute a specific function, the processor 404 of the circuitry 402 may be configured to execute program code portions stored on the memory 408, wherein the stored program code portions correspond to the specific function. Furthermore, the functions and operations of the circuitry 402 may be a stand-alone software application or form a part of a software application that carries out additional tasks related to the circuitry 402. The described functions and operations may be considered a method that the corresponding device is configured to carry out, such as the method 200, 200', 200", 200‴ discussed above in connection with Fig. 2A to 2D. In addition, while the described functions and operations may be implemented in software, such functionality may as well be carried out via dedicated hardware or firmware, or some combination of one or more of hardware, firmware, and software. In the following, the function and operations of the computing device 400 is described.

The control circuitry 402 is configured to obtain, from one or more vehicles, information indicative of one or more local updates of the machine learning model generated through training the machine learning model on sensor data samples obtained in the respective vehicle, and one or more sensor data embeddings associated with the sensor data samples used in said training. This may be performed e.g. by execution of an obtaining function 410. Each sensor data embedding is a representation of said sensor data sample in a multi-dimensional space, generated by processing said sensor data sample through one or more sensor data encoding networks that have been trained to process sensor data samples and to output corresponding sensor data embeddings in the multi-dimensional space.

The control circuitry 402 is further configured to store the one or more sensor data embeddings as documentation information for the training of the machine learning model. This may be performed e.g. by execution of a first storing function 412.

The control circuitry 402 may be further configured to generate a global update of the machine learning model based on the information indicative of the local updates of the machine learning model. This may be performed e.g. by execution of a first generating function 414. The control circuitry 402 may be further configured to transmit information indicative of the global update of the machine learning model to the one or more vehicles. This may be performed e.g. by execution of a first transmitting function 416.

The control circuitry 402 may be further configured to determine a performance metric of the global update of the machine learning model. This may be performed e.g. by execution of a first determining function 418. The global update of the machine learning model may then be transmitted provided that the performance metric of the global update of the machine learning model meets a defined performance criterion.

The control circuitry 402 may be further configured to determine a target sub-space within the multi-dimensional space, based on an existence of stored sensor data embeddings within said sub-space and/or a performance metric of the global update of the machine learning model on sensor data samples associated with sensor data embeddings within said sub-space. This may be performed e.g. by execution of a second determining function 420. The control circuitry 402 may be further configured to transmit a relevance criterion indicative of said target sub-space, to the one or more vehicles. This may be performed e.g. by execution of a second transmitting function 422.

The control circuitry 402 may be further configured to receive a set of sensor data samples used in training the machine learning model to generate each of the local updates of the machine learning model. This may be performed e.g. by execution of a receiving function 424. The control circuitry 402 may be further configured to store the received set of sensor data samples. This may be performed e.g. by execution of a second storing function 426.

The control circuitry 402 may be further configured to generate synthetic sensor data samples from the stored sensor data embeddings, by processing the sensor data embeddings through one or more decoding networks that has been trained to process sensor data embeddings and to output corresponding synthetic data for each sensor data embedding. This may be performed e.g. by execution of a second generating function 428. Each of the one or more decoding networks has been trained in association with at least one of the one or more encoding networks so as to relate to the same multi-dimensional space. The control circuitry 402 may be further configured to store the synthetic sensor data samples. This may be performed e.g. by execution of a third storing function 430.

The control circuitry 402 may be further configured to train a further machine learning model in view of the stored documentation information. This may be performed e.g. by execution of a training function 432. The further machine learning model may be trained using the stored sensor data samples and/or the stored synthetic sensor data samples.

It should be noted that one or more functions as mentioned above may be implemented as a common function.

It should be further noted that the principles, features, aspects, and advantages of the method 200, 200', 200", 200‴ as described above in connection with Fig. 2A to 2D, are applicable also to the computing device 400 as described herein. In order to avoid undue repetition, reference is made to the above. Hence, the control circuitry may be configured to perform any of the steps as described as part of the method 200, 200', 200", 200‴.

Figure 5 is a schematic illustration of a vehicle 500 in accordance with some embodiments. The vehicle 500 may e.g. form part of a fleet of vehicles, used in decentralized learning of a machine learning model, as described herein.

The vehicle 500 may be equipped with an Automated Driving System (ADS) 510. As used herein, a "vehicle" is any form of motorized transport. For example, the vehicle 500 may be any road vehicle such as a car (as illustrated herein), a motorcycle, a (cargo) truck, a bus, a smart bicycle, etc. The vehicle 500 may be equipped with the computing device 300 as described above. The vehicle 500 is thus enabled for performing at least part of the disclosed technology. The computing device 300 may be provided as part of any suitable module(s) or system(s), or distributed across several such modules or systems, as described below. The computing device 300 may e.g. be implemented as part of the control system 502 or using the control circuitry 504 thereof. Alternatively, the computing device 300 may be implemented as a separate system communicatively connected to other parts of the vehicle 500, such as the sensor system 520 for obtaining sensor data samples, and the communication system 526 for transmitting data to a remote entity. The techniques of the method 100 may e.g. be performed when computational resources of the vehicle are free (or freed-up), such as when the vehicle is parked, or when the vehicle is charging.

The vehicle 500 comprises a number of elements which can be commonly found in autonomous or semi-autonomous vehicles. It will be understood that the vehicle 500 can have any combination of the various elements shown in Fig. 5. Moreover, the vehicle 500 may comprise further elements than those shown in Fig. 5. While the various elements are herein shown as located inside the vehicle 500, one or more of the elements can be located externally to the vehicle 500. Further, even though the various elements are herein depicted in a certain arrangement, the various elements may also be implemented in different arrangements, as readily understood by the skilled person. It should be further noted that the various elements may be communicatively connected to each other in any suitable way. The vehicle 500 of Fig. 5 should be seen merely as an illustrative example, as the elements of the vehicle 500 can be realized in several different ways.

The vehicle 500 comprises a control system 502. The control system 502 is configured to carry out overall control of functions and operations of the vehicle 500. The control system 502 comprises control circuitry 504 and a memory 506. The control circuitry 502 may physically comprise one single circuitry device. Alternatively, the control circuitry 502 may be distributed over several circuitry devices. As an example, the control system 502 may share its control circuitry 504 with other parts of the vehicle. The control circuitry 502 may comprise one or more processors, such as a central processing unit (CPU), microcontroller, or microprocessor. The one or more processors may be configured to execute program code stored in the memory 506, in order to carry out functions and operations of the vehicle 500. The processor(s) may be or include any number of hardware components for conducting data or signal processing or for executing computer code stored in the memory 506. In some embodiments, the control circuitry 504, or some functions thereof, may be implemented on one or more so-called system-on-a-chips (SoC). As an example, the ADS 510 may be implemented on a SoC. The memory 506 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 506 may include database components, object code components, script components, or any other type of information structure for supporting the various activities of the present description.

In the illustrated example, the memory 506 further stores map data 508. The map data 508 may for instance be used by the ADS 510 of the vehicle 500 in order to perform autonomous functions of the vehicle 500. The map data 508 may comprise high-definition (HD) map data and/or standard-definition (SD) map data. It is contemplated that the memory 508, even though illustrated as a separate element from the ADS 510, may be provided as an integral element of the ADS 510. In other words, according to some embodiments, any distributed or local memory device may be utilized in the realization of the present inventive concept. Similarly, the control circuitry 504 may be distributed e.g. such that one or more processors of the control circuitry 504 are provided as integral elements of the ADS 510 or any other system of the vehicle 500. In other words, according to an exemplary embodiment, any distributed or local control circuitry device may be utilized in the realization of the disclosed technology.

The vehicle 500 further comprises a sensor system 520. The sensor system 520 is configured to acquire sensory data about the vehicle itself, or of its surroundings. The sensor system 520 may for example comprise a Global Navigation Satellite System (GNSS) module 522 (such as a GPS) configured to collect geographical position data of the vehicle 500. The sensor system 520 may further comprise one or more sensors 524. The one or more sensor(s) 524 may be any type of on-board sensors, such as cameras, LIDARs and RADARs, ultrasonic sensors, gyroscopes, accelerometers, odometers etc. It should be appreciated that the sensor system 520 may also provide the possibility to acquire sensory data directly or via dedicated sensor control circuitry in the vehicle 500.

The vehicle 500 further comprises a communication system 526. The communication system 526 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 526 may communicate using one or more communication technologies. The communication system 526 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 500 or with local infrastructure elements. ETSI is working on cellular standards for vehicle communication and for instance 5G is considered as a suitable solution due to the low latency and efficient handling of high bandwidths and communication channels.

The communication system 526 may further provide the possibility to send output to a remote location (e.g. remote server, operator or control center) by means of the one or more antennas. Moreover, the communication system 526 may be further configured to allow the various elements of the vehicle 500 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 500 further comprises a maneuvering system 520. The maneuvering system 528 is configured to control the maneuvering of the vehicle 500. The maneuvering system 528 comprises a steering module 530 configured to control the heading of the vehicle 500. The maneuvering system 528 further comprises a throttle module 532 configured to control actuation of the throttle of the vehicle 500. The maneuvering system 528 further comprises a braking module 534 configured to control actuation of the brakes of the vehicle 500. The various modules of the steering system 528 may receive manual input from a driver of the vehicle 500 (i.e. from a steering wheel, a gas pedal and a brake pedal respectively). However, the maneuvering system 528 may be communicatively connected to the ADS 510 of the vehicle, to receive instructions on how the various modules should act. Thus, the ADS 510 can control the maneuvering of the vehicle 500.

As stated above, the vehicle 500 comprises an ADS 510. The ADS 510 may be part of the control system 502 of the vehicle. The ADS 510 is configured to carry out the functions and operations of the autonomous functions of the vehicle 500. The ADS 510 can comprise a number of modules, where each module is tasked with different functions of the ADS 510.

The ADS 510 may comprise a localization module 512 or localization block/system. The localization module 512 is configured to determine and/or monitor a geographical position and heading of the vehicle 500, and may utilize data from the sensor system 520, such as data from the GNSS module 522. Alternatively, or in combination, the localization module 512 may utilize data from the one or more sensors 524. The localization system may alternatively be realized as a Real Time Kinematics (RTK) GPS.

The ADS 510 may further comprise a perception module 514 or perception block/system. The perception module 514 may refer to any commonly known module and/or functionality, e.g. comprised in one or more electronic control modules and/or nodes of the vehicle 500, adapted and/or configured to interpret sensory data - relevant for driving of the vehicle 500 - to identify e.g. obstacles, vehicle lanes, relevant signage, appropriate navigation paths etc. The perception module 514 may thus be adapted to rely on and obtain inputs from multiple data sources, such as automotive imaging, image processing, computer vision, and/or in-car networking, etc., in combination with sensory data e.g. from the sensor system 520.

The localization module 512 and/or the perception module 514 may be communicatively connected to the sensor system 520 in order to receive sensor data from the sensor system 520. The localization module 512 and/or the perception module 514 may further transmit control instructions to the sensor system 520.

The ADS may further comprise a path planning module 516. The path planning module 516 is configured to determine a planned path of the vehicle 500 based on a perception and location of the vehicle as determined by the perception module 514 and the localization module 512 respectively. A planned path determined by the path planning module 516 may be sent to the maneuvering system 528 for execution. As an example, the determined current position of the vehicle on the navigation map may be transmitted to the path planning module 516.

The ADS may further comprise a decision and control module 518. The decision and control module 518 is configured to perform the control and make decisions of the ADS 510. For example, the decision and control module 518 may decide on whether the planned path determined by the path-planning module 516 should be executed or not.

It should be understood that parts of the described solution may be implemented either in the vehicle 500, in a system located externally to the vehicle, or in a combination of internal and external to the vehicle; for instance, in a server in communication with the vehicle, a so-called cloud solution. The different features and principles of the embodiments may be combined in other combinations than those described. Further, the elements of the vehicle 500 (i.e. the systems and modules) may be implemented in different combinations than those described herein.

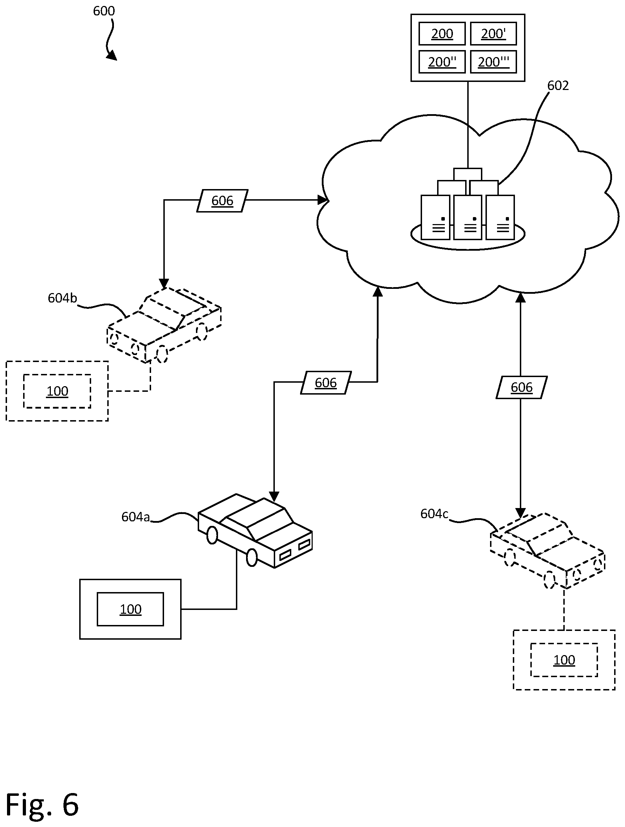

Figure 6 illustrates, by way of example, a system 600 according to some embodiments. More specifically, a system 600 being configured to implement the principles of the presently disclosed technology. The system 600 should therefore be seen as a non-limiting example of a realization of the herein disclosed aspects of the present technology. For instance, the system 600 may be configured to perform the method 100 described above in connection with Fig. 1, as well as the method 200, 200', 200", 200‴ described in connection with Fig. 2A to 2D. Thus, any features or principles described above are applicable also to the system 600 as described herein, and vice versa, unless otherwise stated.

The system 600 comprises a remote entity 602 or server (or remote, cloud, central, back-office, fleet, or back-end server), referred to in the following as the remote server 602 or just server 602. The server 602 may be configured to perform the method 200, 200', 200", 200‴ as described above in connection to Fig. 2A to 2D. The server 602 may comprise the computing device 400 as describe above in connection with Fig. 4. The server 602 may be distributed over a number of entities, such as a number of regional infrastructures. The regional infrastructures may serve as intermediate servers in different geographical regions to aggregate the results of various clients (i.e. vehicles) in different regions. This can provide for a hierarchical decentralized learning, which can help in efficiently managing larger-scale fleet of vehicles.

As illustrated, the server 602 may be provided in the cloud, i.e. as a cloud-implemented server. Advantageously, the server 602 may perform more computational heavy tasks, or manage and coordinate the fleet of vehicles, such as aggregating data from, or distributing data to, the different vehicles of the fleet, or updating ADS functions and distributing the updates to the fleet.

The system 600 further comprises one or more vehicles 604a-c, also referred to as a fleet of vehicles 604a-c. The one or more vehicles 604a-c may be vehicles as described above in connection with Fig. 5. Thus, the one or more vehicles 604a-c may be configured to perform the method 100. Specifically, the one or more vehicles 604a-c may comprise the computing device 300 as described above in connection with Fig. 3. The fleet illustrated in Fig. 6 comprises three vehicles, a first, second and third vehicle 604a-c, by way of example. The system 600 may however comprise any number of vehicles 604a-c. Even though reference will mainly be made to the first vehicle 604a, the same aspects apply also to the other vehicles of the fleet of vehicles.

The one or more vehicles 604a-c are communicatively connected to the remote server 602. This may provide for transmitting and/or receiving data 606 between the vehicles and the server. The one or more vehicles 604a-c may be further communicatively connected to each other. The data 606 may be any kind of data, such as communication signals, sensor data samples, sensor data embeddings, information indicative of local/global updates of the machine learning model, etc. The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to mid-ranged communication protocols, such as Wireless Local Area Network (WLAN) (e.g. IEEE 802.11) based solutions. The sever 602 comprises a suitable memory and control circuitry, for example, one or more processors or processing circuitry, as well as one or more other components such as a data interface and transceiver. The server 602 may also include software modules or other components, such that the control circuity can be configured to execute machine-readable instructions loaded from memory to implement the steps of the method to be performed.

As mentioned above, each vehicle of the one or more vehicles 604a-c may be configured to perform the vehicle-side method 100, while the server 602 may be configured to perform the server-side method 200, 200', 200", 200‴. It is however to be appreciated that these examples should not be seen as limiting, as several different ways of implementation may be possible, depending on a specific realization. For further details regarding the different steps, reference is made to the above, in order to avoid undue repetition.

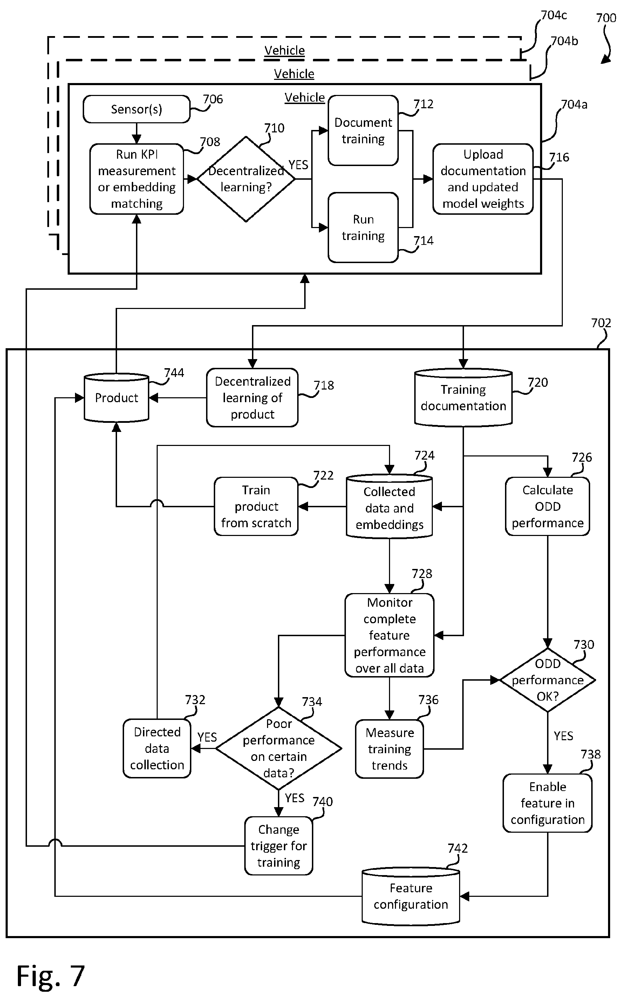

Fig. 7 is a block diagram illustrating some embodiments of the disclosed technology. The block diagram can be seen as an alternative representation of the disclosed technology described above. The block diagram illustrates the data pipeline 700 of the methods 100, 200, 200', 200", 200‴ as performed across one or more vehicles 704a, 704b, 704c, responsible for the local training of the machine learning model as part of the decentralized learning scheme, and a remote entity 702 responsible for the centralized consolidation of the machine learning model. It should be noted that the block diagram is merely to be seen as an illustrative example of the disclosed technology.

Looking first at the vehicle-side. Block 706 represents one or more sensors of the vehicle 704a, which captures sensor data samples. The sensor data samples are then sent to block 708 where they are evaluated to determine whether they meet a defined relevance criterion. The relevance criterion can e.g. be based on a KPI measure, or embeddings matching. If the sensor data samples pass the check for being used in the decentralized learning (block 710), they are sent to block 714 for use in training of the machine learning model, to generate a local update of the machine learning model.

In parallel with the training, the training process is documented (block 712). As explained above, the documentation may encompass storing sensor data embeddings generated for the sensor data samples used in the training. Additional information may also be stored as part of the documentation process, such as which order the sensor data samples are used in the training, and what increase in performance they yield. After the training has been concluded, the documentation information (e.g. the sensor data embeddings) and information indicative of a local update of the machine learning model (e.g. updated model weights) can be transmitted (block 716) to the remote entity 702.

The documentation information associated with the decentralized training of the machine learning model may be stored in the remote entity (block 720). This documentation process (mainly blocks 712, 716 and 720) enables a number of specific use cases, as will be further explained in the following. It may be further provided to the decentralized learning (block 718) of the final product (e.g. a production model).

A first use case is automated verification and validation on ADS feature-level (mainly blocks 726, 730, 738 and 742). An ADS feature (associated with the machine learning model) is available in a defined ODD, which can be represented by a defined sub-space in the embedding space. An ODD may for instance be defined as all driving scenarios in darkness and on certain types of roads. The decentralized learning can then be enabled for the fleet within this defined sub-space. All local training performed by the fleet of vehicles 704a-c within this sub-space are then documented and communicated to the remote entity 702. The performance within the ODD (either of the local updates or a global update of the machine learning model) may be continuously evaluated (block 726) in the remote entity. If the performance is OK (e.g. above a certain threshold, block 730), the feature may be enabled (block 728), and included in a feature configuration (block 742) of the ADS. In some cases, the ODD performance may be accepted when no new (or fewer than a set threshold) trainings (i.e. reported local updates) are performed within the ODD, within a certain time-limit, since this would indicate that the performance of the machine learning model has reached a point where it seems to handle all new scenarios it is exposed to with desirable performance. The enabled feature may then further be added to the final product (block 744) which is deployed in the fleet of vehicles.

A second use case is to support updates to the current machine learning model (e.g. increasing its size), or to completely new model architectures, without throwing away earlier training efforts (mainly bocks 724 and 722). As explained in the foregoing, all local training of the machine learning model is documented and collected in the remote entity 702 (block 724). The sensor data samples used in training can either be communicated from the fleet of vehicles 704a-c, or reconstructed as synthetic sensor data samples by leveraging one or more decoding networks operating on the sensor data embeddings (as explained above in connection with Fig. 2B). At any time, a complete re-training of the existing machine learning model, an update of the existing machine learning model, or a completely new machine learning model, can be run in the remote entity 702, based on the documented fleet training, and other collected data (block 722). This enables updates or replacement of the model architecture in a more efficient way. The retrained model may then be added to the final product (block 744) for deployment to the fleet of vehicles.

A third use case is to enable automated development and improvement of the machine learning model through a documented progress without developer intervention (mainly blocks 728, 736, 734, 740, 732, 730, and 738). Again, all local training of the machine learning model are documented and collected in the remote entity 702 (block 724). The documentation information can be mapped to the collected data (i.e. the sensor data samples stored in the remote entity). Through this mapping, it is possible to assess strengths and weaknesses of the machine learning model without any targeted offline activity (blocks 728, 734). This can be used for simplified product decisions to enable feature in certain conditions when performance is good enough. Moreover, it can highlight problem areas where directed efforts are needed, for example additional offline data collection (block 732) or target more fleet training for certain data, e.g. by modifying the triggering for training in the fleet (block 740) through adjusting KPI thresholds and/or defining new query embeddings. Even further, it can be used to measure the occurrence of training over time (i.e. training trends) to build confidence that the product is improving (block 736).

The disclosed technology has been presented above with reference to specific embodiments. However, other embodiments than the above described are possible and within the scope of the disclosed technology. Different method steps than those described above, performing the methods by hardware or software, may be provided within the scope of the disclosed technology. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the disclosed technology may be at least in part implemented by means of both hardware and software, and that the same item of hardware may represent several "means" or "units".

## Claims

1. A computer-implemented method (100), performed in a vehicle, for training a machine learning model, the method (100) comprising:
i. obtaining (S102), from one or more sensors of the vehicle, a sensor data sample pertaining to a surrounding environment of the vehicle;
ii. generating (S104) one or more sensor data embeddings associated with the sensor data sample, wherein the one or more sensor data embeddings are representations of the sensor data sample in a multi-dimensional space, generated by processing said sensor data sample through one or more sensor data encoding networks that have been trained to process sensor data samples and to output corresponding sensor data embeddings in the multi-dimensional space;
iii. determining (S106) whether the sensor data sample meets a defined relevance criterion;
iv. in response to the sensor data sample meeting the defined relevance criterion, training (S108) the machine learning model, using the sensor data sample, thereby generating a local update of the machine learning model; and
transmitting (S112), to a remote entity, information indicative of the local update of the machine learning model and the one or more sensor data embeddings.

2. The method (100) according to claim 1, further comprising:
v. determining (S110) a performance metric of the local update of the machine learning model, and
repeating the steps denoted i. to v. until the performance metric of the local update of the machine learning model meets a defined performance requirement, and
wherein transmitting (S112) the information indicative of the local update of the machine learning model and the one or more sensor data embeddings is performed provided that the defined performance requirement is met.

3. The method (100) according to claim 1 or 2, further comprising transmitting (S114), to the remote entity, the sensor data samples which, when used in training the machine learning model, resulted in an increase of the performance metric above a defined threshold.

4. The method (100) according to any one of the claims 1 to 3, wherein the relevance criterion is based on a proximity between the one or more sensor data embeddings and a query embedding, wherein the query embedding has been generated by processing a query through a query encoding network that have been trained to process queries and to output a corresponding query embedding in the multi-dimensional vector space, wherein the query encoding network has been trained in association with one or more of the sensor data encoding networks such that a query embedding of a query that is contextually related to a specific sensor data sample points towards the same point as the one or more sensor data embeddings of that sensor data sample within the multi-dimensional vector space; and
wherein determining (S106) whether the sensor data sample meets the defined relevance criterion comprises determining whether the one or more sensor data embeddings are within a distance value from the query embedding, in the multi-dimensional space.

5. The method (100) according to any one of the claims 1 to 4, further comprising transmitting (S116), to the remote entity, meta data associated with the training of the machine learning model, performed in the vehicle.

6. The method (100) according to any one of the claims 1 to 5, further comprising receiving (S118), from the remote entity, information indicative of a global update of the machine learning model, wherein the global update of the machine learning model is based on a number of local updates of the machine learning model obtained from a plurality of vehicles participating in the training of the machine learning model, and
updating (S120) the machine learning model of the vehicle, based on the received information indicative of the global update of the machine learning model.

7. The method (100) according to any one of the claims 1 to 6, wherein the transmitted one or more sensor data embeddings and/or the transmitted meta data associated with the training of the machine learning model is stored at the remote entity as documentation information for the training of the machine learning model.

8. The method (100) according to claim 7, wherein the documentation information is used for subsequent retraining of the machine learning model, performed by the remote entity.

9. A computing device (300) for training a machine learning model in a vehicle, the computing device (300) comprising control circuitry (302) configured to:
i. obtain, from one or more sensors of the vehicle, a sensor data sample pertaining to a surrounding environment of the vehicle;
ii. generate one or more sensor data embeddings associated with the sensor data sample, wherein the one or more sensor data embeddings are representations of the sensor data sample in a multi-dimensional space, generated by processing said sensor data sample through one or more sensor data encoding networks that have been trained to process sensor data samples and to output corresponding sensor data embeddings in the multi-dimensional space;
iii. determine whether the sensor data sample meets a defined relevance criterion;
iv. in response to the sensor data sample meeting the defined relevance criterion, train the machine learning model, using the sensor data sample, thereby generating a local update of the machine learning model; and
transmit, to a remote entity, information indicative of the local update of the machine learning model and the one or more sensor data embeddings.

10. A computer-implemented method (200, 200', 200", 200‴) for training a machine learning model, the method (200, 200', 200", 200‴) comprising:
obtaining (S202), from one or more vehicles, information indicative of one or more local updates of the machine learning model generated through training the machine learning model on sensor data samples obtained in the respective vehicle, and one or more sensor data embeddings associated with the sensor data samples used in said training, wherein each sensor data embedding is a representation of said sensor data sample in a multi-dimensional space, generated by processing said sensor data sample through one or more sensor data encoding networks that have been trained to process sensor data samples and to output corresponding sensor data embeddings in the multi-dimensional space; and
storing (S204) the one or more sensor data embeddings as documentation information for the training of the machine learning model.

11. The method (200, 200', 200", 200‴) according to claim 10, further comprising generating (S206) a global update of the machine learning model based on the information indicative of the local updates of the machine learning model; and
transmitting (S210) information indicative of the global update of the machine learning model to the one or more vehicles.

12. The method (200, 200', 200", 200"') according to claim 11, wherein the training of the machine learning model is performed for a defined sub-space of the multi-dimensional space representing an operational design domain of an ADS feature associated with the machine learning model, and
wherein obtaining (S202) the information indicative of the local updates of the machine learning model are received from the one or more vehicles in response to the local updates of the machine learning model resulting in an increase of the performance metric of the machine learning model above a defined threshold,
wherein transmitting (S210) the global update of the machine learning model is performed provided that no new information indicative of a local update of the machine learning model within the defined sub-space has been obtained within a defined time frame.

13. The method (200, 200', 200", 200"') according to any one of the claims 10 to 12, further comprising training (S224) a further machine learning model in view of the stored documentation information.

14. A computing device (400) for training a machine learning model, the computing device (400) comprising control circuitry (402) configured to:
obtain, from one or more vehicles, information indicative of one or more local updates of the machine learning model generated through training the machine learning model on sensor data samples obtained in the respective vehicle, and one or more sensor data embeddings associated with the sensor data samples used in said training, wherein each sensor data embedding is a representation of said sensor data sample in a multi-dimensional space, generated by processing said sensor data sample through one or more sensor data encoding networks that have been trained to process sensor data samples and to output corresponding sensor data embeddings in the multi-dimensional space; and
store the one or more sensor data embeddings as documentation information for the training of the machine learning model.

15. A computer program product comprising instructions, which when the program is executed by a computing device, causes the computing device to carry out the method (100) according to any one of the claims 1 to 8, or the method (200, 200', 200", 200‴) according to any one of the claims 10 to 13.
